# EUROPEAN PATENT APPLICATION

(11) **EP 4 421 696 A1**
(43) Date of publication of application: **28.08.2024**
(21) Application number: 23157778.4
(22) Date of filing: 21.02.2023
(51) Int. Cl.: G06Q 10/02

(54) **METHOD FOR MANAGING PHYSICAL WORKPLACES OF AN OFFICE BUILDING AS WELL AS COMPUTER PROGRAM PRODUCT**

(71) Applicant: Fujitsu Technology Solutions GmbH, 80807 München (DE)
(72) Inventor: Langhals, Sven, 80807 München (DE)
(74) Representative: Epping - Hermann - Fischer

(57) **Abstract**

The invention concerns a method for managing physical workplaces of an office building, wherein each workplace has at least one peripheral device uniquely associated with the respective workplace, the method comprising the following steps:
- reading a unique identifier of the peripheral device of a workplace by means of a computer of a user, the computer being connected to the peripheral device of the workplace,
- transmitting the unique identifier to a management system,
- retrieving, by the management system, workplace information stored for the unique identifier from a database, and
- determining a booking status of the workplace by the management system based on the stored workplace information.

The invention also relates to a computer program.

## Description

The invention relates to a method for managing physical workplaces of an office building. The invention also refers to a computer program product.

Within companies, different forms of organization are known with regard to the allocation of workplaces. In particular due to the COVID pandemic, the so-called desk-sharing system is gaining in importance, in which physical workplaces are no longer permanently assigned to individual employees but can be used by a large number of different employees. This allows employees to freely choose their workspace in the office on a daily basis, depending on occupancy and the necessary equipment.

For example, a company's employees can have an application installed on their mobile device (e.g., a laptop/notebook) that can be used to make workplace bookings or reservations. As part of such reservation process, a company's employees can call up workplace information via their mobile devices and thus find out about the occupancy or equipment of a workplace. Based on the retrieved workplace information, an employee can then select a suitable workplace and reserve it for a specific period.

An objective problem underlying the present application is to provide a concept to determine and evaluate the presence of an employee.

According to a first aspect, it is disclosed a method for managing physical workplaces of an office building. Each workplace has at least one peripheral device uniquely associated with the respective workplace. The method comprises the following steps:
- reading a unique identifier of the peripheral device of a workplace by means of a computer of a user, the computer being connected to the peripheral device of the workplace,
- transmitting the unique identifier to a management system,
- retrieving, by the management system, workplace information stored for the unique identifier from a database, and
- determining a booking status of the workplace by the management system based on the stored workplace information.

The inventor found out a very efficient and reliable solution for managing physical workplaces. By reading out the unique identifier a correct assignment of a physical workplace to a user can be made. Since each workplace typically has one or more peripheral devices, these can be used to easily and efficiently determine whether and who is using a particular workplace. In other words, a peripheral device is assigned to and placed at a physical workplace such that an assignment of a user to a physical workspace can be done and/or evaluated. Permanently installed hardware thus serves as identification for a user at a physical workplace. By evaluation of the stored workplace information and the unique identifier a booking status for workplaces can be easily determined by the management system, without the need for extra resources or capacities.

In a typical scenario, each (shared) workplace has permanently installed hardware (e.g., display, USB docking station) to which a user's client system connects. The database, e.g., of the management system or of a separate booking system, also stores the unique, readable identifier of the hardware installed there (e.g. serial numbers, MAC addresses if network-capable). If a user enters the physical workplace and connects his computer with a respective peripheral device, subsequently, the unique identifier is read out and processed by the management system. This can be done via a software installed at the user's computer. The management system gathers information about the workplace by interacting with the database. Depending on that workplace information, in one or more furthers steps various evaluation measures can be done, e.g., determining if the user is allowed to use the workplace, if the workplace is already booked and much more (more details below).

Advantageously, this avoids using conventional booking systems that require employees to manually maintain workplace bookings, for example by confirming them using an app and/or scanning a QR code. Furthermore, it is not necessary to have one or more specific sensors to detect the presence of a user, for example by means of a presence sensor of an office desk, a lamp or the like.

The mentioned computer may be a mobile device, e.g., a notebook, a laptop, a portable mini pc or the like. For example, the computer is representative of a user, so that a user can be assigned to the physical workplace, such as by the management system.

The computer being connected to the peripheral device means a data connection that is wireless or by wire.

The management system is an entity, which can be a single system or be composed by several sub-units. E.g., the management system is a server system. For example, the management system can be or can comprise a booking system for booking a physical workspace, for releasing a booked workplace and the like.

The management system can be a local system, e.g., installed at the computer. Alternatively, the management system is implemented locally, for example on the computer, or centrally, for example as a server, or as a mixed form.

The database can be part of the management system or be a separate unit.

According to an embodiment, determining a booking status comprises determining a presence status. For example, the management system simply evaluates that no user currently uses the workplace or that the workplace is already in use from another user. In this regard, for example, a database entry is stored in the database for the unique identifier, indicating that the workplace is occupied or vacant. Thus, for a mere basic function, the management system only detects whether or not someone is sitting at the workplace or uses the workplace.

According to an embodiment, in the step of transmitting, a user ID of the user is transmitted to the management system, and wherein the step of determining is performed taking into account the transmitted user ID. For example, login data or account data of the user is transmitted. Afterwards, the management system can evaluate, based on the user ID, whether the user is allowed to use the workplace or not. For example, the stored workplace information of database can include information about a user, who currently uses, has booked or reserved the workplace. This information can be compared to the transmitted user ID for the assessment as described above.

According to an embodiment, the booking status has at least one of the following states:
- the workplace is available for use,
- the workplace is occupied,
- a booking for a later time is stored for the workplace,
- a booking is stored for the workplace to which a user ID is assigned. This embodiment contributes to the advantages and functions mentioned above. There can also be other or more states for the booking status.

Depending on the entries in the database, the management system can determine different booking statuses. For example, if nothing is stored in the database at all, the respective workplace might be at free disposal and the user is allowed to use the workplace. As another example, the workplace might be booked by another user at the time of checking or at a time later after checking. Thus, the user is not allowed to use the workplace or only for a certain time, until the next booking starts. Further statuses are possible and are not listed entirely here.

According to an embodiment, after the determination step, the management system causes the stored workplace information in the database to be changed. Thus, the database is updated with new, current information, e.g., that the respective user now uses the workplace.

According to an embodiment, after the step of determining the booking status, the management system initiates feedback to the computer, the feedback being dependent on the determined booking status. For example, a notice is given to the user like a suggestion, a warning or the like. Furthermore, measures such as locking the computer can be enforced.

According to an embodiment, the management system checks at least one further condition as to whether an occupancy of the corresponding workplace by the user is permissible, wherein the further condition concerns a distance rule to one or more neighboring workplaces. Thus, rules for social distancing or internal firewalls can be fulfilled.

According to an embodiment, the stored workplace information includes information about a wireless equipment item of the workplace, which is located in an environment of the workplace. In a further embodiment, the management system controls the connected computer so that the computer can only connect to the wireless equipment item.

Thus, it can be specified, for example, with which wireless equipment items the user's computer might establish a connection or with which wireless equipment items the computer can be work with.

Typically, a workplace comprises other resources that can be addressed and controlled wirelessly by the computer connected to the workplace (e.g., via Bluetooth). This, for example, concerns smart office desks or smart lamps that can be linked and controlled by computer via a wireless connection. However, the inventor recognized that the wirelessly addressable devices between neighboring workplaces cannot simply be spatially delimited by the computer itself, and the computer cannot identify which wireless device belongs to "its" physical workplace (to whose monitor the computer is connected) and should be controlled.

The described embodiments solve these problems in that for each unique identifier, the stored workplace information includes information about the wireless devices belonging to the workplace (e.g., MAC addresses or the like). This allows the computer connected to the monitor to identify which wireless devices belong to the workplace so that it can connect to and control them (and not connect to devices at a neighboring workplace).

According to an embodiment, the steps of reading the unique identifier, the user ID and/or transmitting it to the management system are triggered by an event and/or occur at regular time intervals. Thus, the steps can occur event based, e.g. by plugging the computer to a respective peripheral device. Further, the steps can occur by polling, e.g., in that management system queries at regular intervals whether a peripheral device is connected or whether the corresponding peripheral device is still connected. Similarly, the steps can occur depending on a so called heartbeat, wherein the computer itself sends a signal to the management system. Thus, for example, if no signal is received, the management system can take action such as releasing the workplace to be used/booked by another user.

According to an embodiment, the peripheral device is a display, a port replicator, a docking station, a mouse, a keyboard, a speaker, a camera. Preferable, it is a display or monitor.

According to an embodiment, the unique identifier is a serial number, a MAC address, a network address, an IMEI, or the like.

According to a second aspect it is disclosed a computer program comprising instructions which, when the program is executed by a computer, cause the computer to carry out the method according to anyone of the embodiments described above. The computer program essentially enables the aforementioned advantages and functions. The above-described embodiments, advantages and functions apply equally to the computer program.

Further advantages, features and further developments result from the following embodiments explained in connection with the figures. Identical, similar or similar-acting elements are given the same reference signs in the figures.

In the figures show:
- Figure 1: an exemplary system for an office building, and
- Figure 2: a schematic flow chart of a method according to an embodiment of the invention.

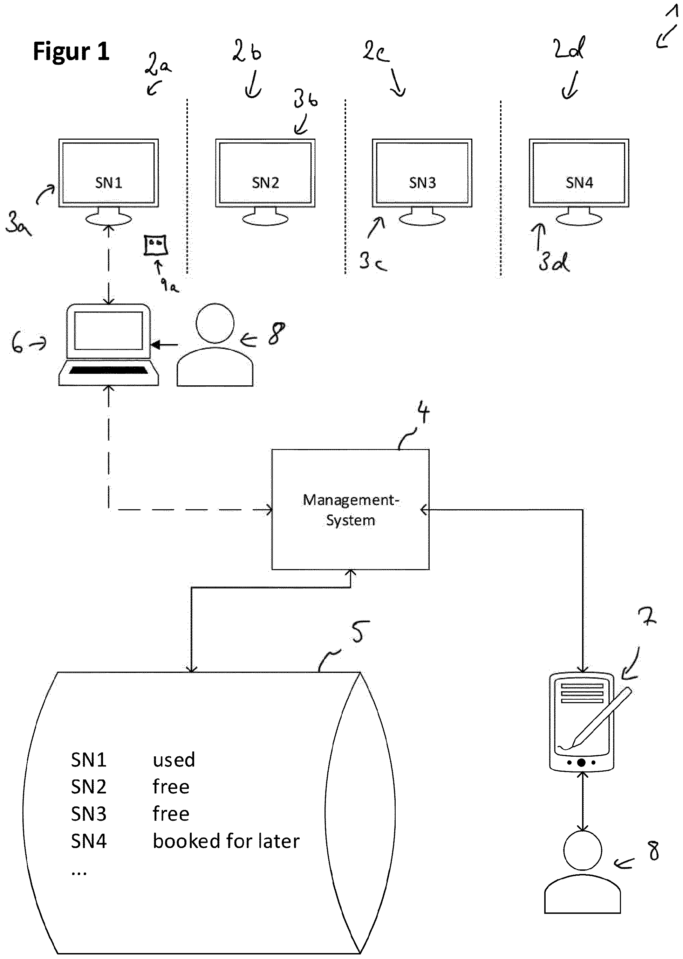

Figure 1 illustrates an exemplary embodiment of a system 1 to manage workplaces in an office building. The system 1 comprises several workplaces 2, wherein in the present example four workplaces 2a to 2d are shown. The workplaces 2a to 2d are physical workplaces, which may be located in separate rooms of the office building or in a common room.

The shown dotted lines symbolize the separation of each workplace 2.

Each workplace 2 has at least one peripheral device, which is uniquely associated to the respective workplace 2. In the present example, each workplace 2 has one display 3 (3a to 3d). Each display 3 has a unique identifier, e.g., a serial number SN1 to SN4.

The system 1 further comprises a management system 4, which is configured for managing the workplaces and determining a booking status for each workplace 2. In particular, the management system 4 serves to allocate a computer or user respectively to a physical workplace, as will be described below. The management system 4 is connected to a database 5, which is configured for storing workplace information for each workplace 2. Furthermore, figure 1 shows a computer 6, a mobile device 7 and a user 8, which is an employee for example. The user 8 can interact with the computer 6 and the mobile device 7. The computer 6 at least has a processor and a storage and is configured to run an operating system known in the art. In the present example, the management system 4 is a central system, e.g., server based, which is separate from a single, individual computer of a user, e.g. an employee. Via the mobile device (or any other device like the computer 6), the user 8 can book a workplace for a certain date. Such booking will be managed by the management system 4 and/or stored in the database 5.

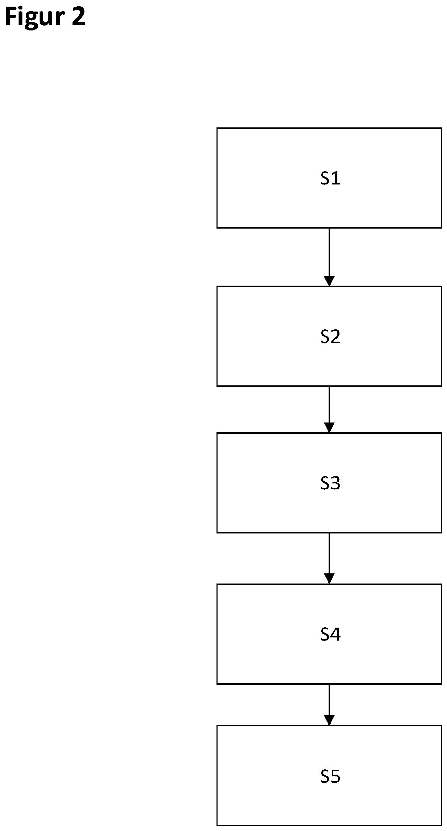

In the following, a method for managing the physical workplaces 2 is described with the help of figure 2, which shows a schematic flowchart.

In this example, the user 8 has entered the workplace 2a and connected his computer 6 to the display 3a, the display 3a representing a peripheral device of the workplace 2a.

In a first step S1, the unique identifier SN1 of the display 3 is read out by the computer 6. For this purpose, a small software, e.g., a service worker software, might be installed and running on the computer 6. The service worker software is triggered by an event, i.e., the connection of the computer 6 to the peripheral device or a boot process of the computer 6 to run the operating system.

In a second step S2, the unique identifier SN1 is transmitted to the management system 4, e.g., by a wired or wireless data connection.

In a third step S3, the management system 4 retrieves workplace information from the database 5, which is associated with the unique identifier SN1. In other words, the management system 4 queries the database 5 for information, which belongs to the unique identifier SN1. For this purpose, the management system 4 is connected to the database 5 by a wired or wireless data connection.

In the present example, for the unique identifier SN1 the workplace information "used" is stored. In other words, the workplace 2a is already used by another user, who for example might just left the workplace 2a temporarily.

In a fourth step S4, the management system 4 determines a booking status for the workplace 2a, which is associated directly with the unique identifier, based on the gathered workplace information.

In the present example, the booking status might be "used". Thus, the user 8 of computer 6 might not be allowed to use the workplace 2a.

In an optional fifth step S5, the management system 4 initiates feedback to the computer 6 depending on the booking status. In the present example, the user 8 might be informed that the workplace 2a is already used and the user is not allowed to use this workplace.

With the described method in its general form, it is possible to determine whether a physical workplace 2 is free and if a user can use this workplace 2 or not.

A more exact and detailed management of the workplaces 2 can be done by one or more further steps, as will be described in the following.

For example, the stored workplace information in the database 5 can include not only the information whether a workplace 2 is free or used, but also information about a user and a booking information, e.g., when the workplace is booked and/or how long. In this regard, in the step of transmitting, a user ID of the user 8 is additionally transmitted to the management system 4, and the step of determining is performed considering the transmitted user ID. Thus, the booking status can comprise the much more different states as mentioned initially, for example:
- the workplace is available for use,
- the workplace is occupied by another user,
- a booking of another user for a later time is stored for the workplace,
- a booking is stored for the workplace to which the transmitted user ID is assigned.

Further, after having determined a booking status, the above mentioned initiation of feedback may include further information or suggestions that can be given to the computer 6 or the user 8 respectively by the management system 4. For example, if the requested workplace is booked or used, a free workplace might be suggested to the user 8, e.g., like workplaces 2b or 2c, which are marked as "free" in the database 5 in the present example.

Further, after the determination step, the management system 4 might initiate that the stored workplace information is updated in the database. For example, if the user 8 uses now workplace 2b, the workplace information stored in the database 5 with respect to the unique identifier SN2 is updated.

An exemplary process could look as follows. After the user 8 has connected to a workplace 2, the management system 4 checks whether the shared workplace 2 associated with the unique identifier is booked per se for an employee (user). If there is a booking, it is checked via the user ID, if the actual user 8 matches the user stored in the database 5 for this unique identifier. If the user 8 matches the database entry, the management system 4 gives feedback to the computer 6, e.g., a message "Welcome the workstation is booked for you until 15:00" is displayed. Optionally, the database 5 is updated, that the user 8 is now using the respective workplace 2. If the requested workplace is currently booked or used, the management system 4 gives feedback to the computer 6 by warning that the workstation is booked. Other actions might by suggested to the computer 6 or user 8, e.g., the suggestion of a free workplace 2. If the management system 4 evaluates that there is a booking for a later time for another user, there might be given an information to the computer 6 or user 8, e.g., suggestion of another workstation or a possibly ad-hoc booking of the workplace until the later booking. If there is no booking at all, a simple ad-hoc booking might be initiated by the management system 4.

Further, the management system 4 can consider a further condition as to whether an occupancy of the corresponding workplace 2 by the user 8 is permissible. For example, the management system 4 can evaluate the entries in the database 5 according to a distancing rule set, wherein the user 8 might not use a workplace 2, although it is free, since in the close environment, another user uses a workplace or has booked a workplace and both users are not allowed to sit close to each other. For example, COVID distance rules can be implemented in the management system 4, wherein a minimum distance can be required between two users. Further, integral firewalls can be set up, due to different projects or clients or the like, wherein neighboring places can be excluded for certain users.

Optionally, the stored workplace information for each unique identifier (here SN1 to SN4) can also include information about wireless equipment items 9 (9a to 9d) of each workplace 2, which are located in the environment of the respective workplaces 2. The management system 4 controls the connected computer 6 so that the computer 6 can only connect to permitted wireless equipment items 9, as already mentioned in the beginning of this writing. For example, the stored workplace information can comprise serial numbers, MAC-addresses or the like to uniquely identify the wireless item. E.g., a wireless equipment item 9 like a Bluetooth mouse might be associated to physical workplace 2a and the user 8, using this workplace 2a, is only allowed to use this mouse and not another one, which is in close vicinity, but belongs to workplace 2b.

It is noted that the above-described steps, in particular steps S1 and S2 of reading the unique identifier, the user ID and/or transmitting it to the management system 4, are triggered by an event and/or occur at regular time intervals.

It is further noted that the peripheral device, instead of a display 3, might also be a port replicator, a docking station, a mouse, a keyboard, a speaker, a camera.

Further, instead of the serial number, the unique identifier can also be a serial number, a MAC address, a network address, an IMEI, or the like.

It is also noted that further details to the devices and system 1 are seen to be not necessary and have been omitted for sake of readability. Particularly, for a person skilled in the art it is clear how to implement the above technical teaching.

### REFERENCE SIGNS

- 1: system
- 2: workplace
- 3: display
- 4: management system
- 5: database
- 6: computer
- 7: mobile device
- 8: user
- 9: wireless equipment item
- Sn: step

## Claims

1. Method for managing physical workplaces (2) of an office building, wherein each workplace (2) has at least one peripheral device uniquely associated with the respective workplace (2), the method comprising the following steps:
- reading a unique identifier (SN) of the peripheral device of a workplace (2) by means of a computer (6) of a user (8), the computer (6) being connected to the peripheral device of the workplace (2),
- transmitting the unique identifier (SN) to a management system (4),
- retrieving, by the management system (4), workplace information stored for the unique identifier (SN) from a database (5), and
- determining a booking status of the workplace (2) by the management system (4) based on the stored workplace information.

2. Method according to claim 1, wherein determining a booking status comprises determining a presence status.

3. Method according to anyone of the preceding claims, wherein, in the step of transmitting, a user ID of the user (8) is transmitted to the management system (4), and wherein the step of determining is performed taking into account the transmitted user ID.

4. Method according to claim 3, wherein the booking status has at least one of the following states:
- the workplace (2) is available for use,
- the workplace (2) is occupied,
- a booking for a later time is stored for the workplace (2),
- a booking is stored for the workplace (2) to which a user ID is assigned.

5. Method according to anyone of the preceding claims, wherein, after the determination step, the management system (4) causes the stored workplace information in the database (5) to be changed.

6. Method according to anyone of the preceding claims, wherein, after the step of determining the booking status, the management system (4) initiates feedback to the computer (6), the feedback being dependent on the determined booking status.

7. Method according to anyone of the preceding claims, wherein the management system (4) checks at least one further condition as to whether an occupancy of the corresponding workplace (2) by the user is permissible, wherein the further condition concerns a distance rule to one or more neighboring workplaces.

8. Method according to anyone of the preceding claims, wherein the stored workplace information includes information about a wireless equipment item (9) of the workplace (2), which is located in an environment of the respective workplace (2).

9. Method according to claim 8, wherein the management system (4) controls the connected computer (6) so that the computer (6) can only connect to the wireless equipment item (9).

10. Method according to anyone of the preceding claims, wherein the steps of reading the unique identifier (SN), the user ID and/or transmitting it to the management system (4) are triggered by an event and/or occur at regular time intervals.

11. The method of anyone of the preceding claims, wherein the peripheral device is a display (3), a port replicator, a docking station, a mouse, a keyboard, a speaker, a camera.

12. The method of anyone of the preceding claims, wherein the unique identifier (SN) is a serial number, a MAC address, a network address, an IMEI, or the like.

13. A computer program comprising instructions which, when the program is executed by a computer, cause the computer to carry out the method according to anyone of claims 1 to 12.
